# FASCICULE DE BREVET EUROPEEN

(11) **EP 1 276 191 B1**
(45) Date de publication et mention de la délivrance du brevet: **04.04.2012**
(21) Numéro de dépôt: 02077645.6
(22) Date de dépôt: 26.06.2002
(51) Int. Cl.: H02B 1/44

(54) **Coffret à capot basculant**
Gehäuse mit kippbarem Deckel
Housing with tiltable hood

(30) Priorité: 27.06.2001 FR 0108574
(43) Date de publication de la demande: 15.01.2003
(73) Titulaire: Hispano Mecano Electrica S.A., 08786 Capellades (Barcelona) (ES)
(72) Inventeur: Pons Tort, Antoni, 08786 Capelladas Anoia (Barcelona) (ES)
(74) Mandataire: Bié, Nicolas

(56) Documents cités:
- DE-U- 29 521 253
- US-A- 1 441 599
- US-A- 4 090 093
- US-A- 6 028 268

## Description

La présente invention concerne un coffret métallique destiné à loger des éléments ou appareils électriques de connexion, commutation ou communication, comprenant un support d'éléments électriques, à fond ou châssis arrière destiné à porter de tels éléments, et un capot qui est fixé de façon amovible au support de manière à le recouvrir de manière enveloppante. (Voir DE-U1-29521253 et US-A-6028268).

Il est souhaitable de structurer de manière simple un tel coffret, tant pour en réduire le coût que pour obtenir une bonne rigidité et assurer une pose et une dépose faciles du capot.

L'invention vise à faciliter la pose et la dépose du capot, ainsi qu'un accès aisé au volume intérieur du coffret, tout en donnant au coffret un agencement simple et robuste.

Selon l'invention, le support d'éléments électriques présente à sa partie supérieure une face d'accrochage du capot et à sa partie inférieure une aire horizontale en console dotée d'un élément de fermeture ; le capot enveloppant est accroché à la face supérieure du support et verrouillé sur l'élément de fermeture ; le support d'éléments électriques présente à sa partie supérieure des avancées horizontales dotées d'ailes perforées à pas régulier et à sa partie inférieure des réglettes perforées à pas régulier et associées à l'aire horizontale pour permettre de fixer de façon réglable en profondeur des organes de montage tels que montants, traverses ou châssis.

On constate que la structure décrite facilite la pose et la dépose du capot et l'accès aux éléments électriques du coffret, tout en restant simple et peu coûteuse.

La face du support prévue pour l'accrochage du capot est de préférence pliée et dotée de fentes, et le capot enveloppant comprend à sa partie supérieure une face munie de languettes venues de pliage ou crevé, les languettes étant conçues pour s'engager dans les fentes du support et former un axe de basculement. La face du capot munie des languettes peut avantageusement avoir, de l'arrière vers l'avant, la même inclinaison montante que la face du support.

Le support peut avantageusement être constitué d'une seule pièce découpée et pliée présentant la face pliée qui sert à l'accrochage du capot, ainsi que les avancées horizontales à ailes latérales repliées vers l'intérieur et l'aire inférieure horizontale.

Le support offre avantageusement des flancs bas pliés verticalement, ces flancs bordant l'aire horizontale et étant reliés aux flancs hauts par des liaisons verticales pliées. Les flancs bas déterminent alors avec les flancs hauts et les liaisons verticales une face verticale qui forme un gabarit de montage pour le capot. Les liaisons verticales peuvent être pliées pour former des ailes frontales perforées à pas régulier, les liaisons verticales étant rattachées aux avancées horizontales pour contribuer à la rigidité du support.

La description qui va être faite à présent d'un mode de réalisation non limitatif, en regard des dessins annexés, permettra de bien comprendre l'invention.

La figure 1 représente en élévation de face le coffret conforme à l'invention.
La figure 2 est une vue de côté du capot.
La figure 3 illustre le montage basculant du capot.
La figure 4 montre le coffret en perspective éclatée.

Le coffret représenté sur les figures est destiné à loger des éléments ou appareils électriques ou électroniques de communication, d'interruption, leurs câblages, etc.. Le coffret comprend un support 10 susceptible d'être accroché ou fixé à une paroi, ce support étant muni d'organes propres au montage des appareils et définissant le volume nécessaire à cet effet ; le coffret comprend aussi un capot 20 destiné à être fixé au support 10 en l'enveloppant pour fermer l'espace de logement ainsi défini.

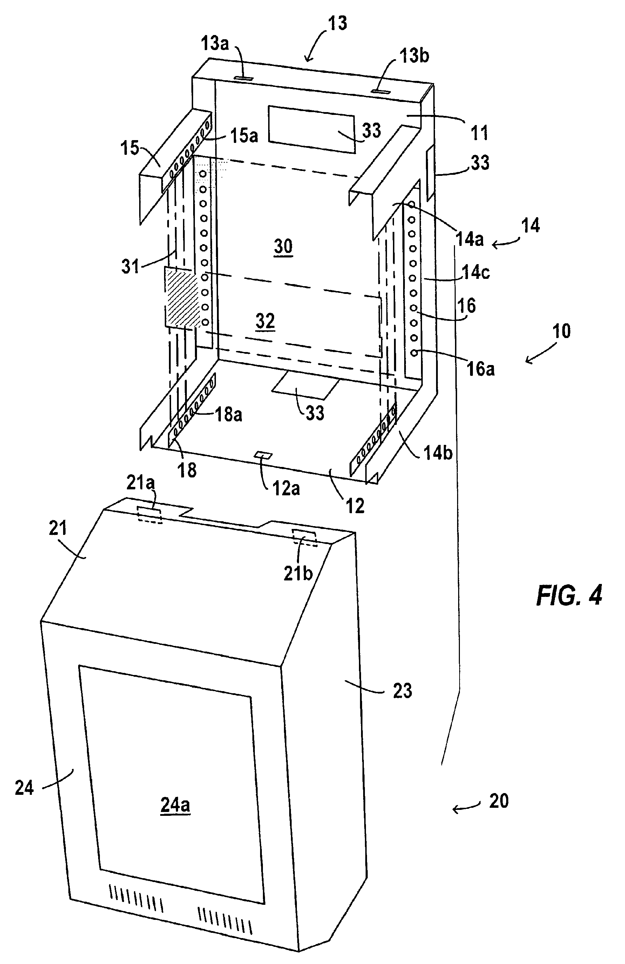

Le support 10 (visible sur la figure 4) est formé à partir d'une pièce monobloc en tôle découpée et pliée. Il présente une paroi principale arrière verticale 11 et une aire horizontale 12 en avancée, telle une console. La paroi arrière verticale 11 se prolonge à son extrémité supérieure par une face pliée 13 inclinée de façon montante de l'arrière vers l'avant et dotée de deux fentes 13a,13b orientées horizontalement selon la largeur du coffret. L'aire horizontale 12 comprend un point de fermeture 12a avec lequel coopère un organe de fermeture solidaire du capot.

Le support 10 présente aussi deux bords latéraux 14 raccordant la face pliée 13 à l'aire horizontale 12 ; près de l'extrémité supérieure des bords 14 sont prévus deux bras hauts 14a en avancée horizontale, ces bras étant venus de pliage pour déterminer chacun une aile latérale de montage 15 dotée d'orifices de fixation 15a répartis avec un pas régulier. Près de l'extrémité inférieure des bords 14 sont prévus des flancs 14b en avancée horizontale bordant latéralement l'aire 12. Les bords 14 possèdent enfin des liaisons verticales ou flancs 14c qui relient les bras 14a aux flancs 14b, ces liaisons verticales étant repliées pour former chacune une aile frontale de montage 16, orientée parallèlement à la paroi principale arrière 11 et dotée de trous régulièrement répartis 16a. Les flancs 14a,14b,14c forment pour le support des parois latérales qui déterminent un gabarit de montage du capot.

Des moyens de support d'appareils tels que rails, platines ou châssis 30 peuvent être fixés aux ailes de montage 16. Des montants 31 peuvent être fixés par des vis à leur extrémité haute aux ailes de montage 15 et à leur extrémité basse à des réglettes de montage 18, et ce pour prendre une position réglable en profondeur (c'est-à-dire réglable perpendiculairement à la paroi arrière 11 du coffret). On observera que les réglettes 18 ont des trous 18a régulièrement répartis et sont formées sur ou fixées à l'aire horizontale 12. On peut ainsi fixer aux montants 31 un châssis 32 parallèle à la paroi 11. Les organes 30,31,32 sont indiqués en tirets sur la figure 4. Des passages de câbles 33 sont prévus dans les parois 11,12 et 14.

Le capot enveloppant 20 est en tôle découpée et pliée et comprend une face supérieure 21, deux faces latérales 22,23 et une face avant 24 munie d'une partie transparente 24a pour observer l'intérieur du coffret, ainsi que d'ouvertures d'aération. Le capot 20 est ouvert sur sa face inférieure, où il présente simplement un organe de fermeture 25 qui coopère avec le point de fermeture 12a. La face supérieure 21 comprend un bandeau 21c incliné en montant de l'arrière vers l'avant avec une pente comparable à celle de la face 13 du support, de façon à épouser la forme de cette face et buter sur elle vers l'avant. Le bandeau 21c a deux languettes 21a,21b obtenues par pliage ou crevé, conçues pour s'engager dans les fentes 13a,13b du support et permettant le basculement du capot relativement au support. La face 21 comprend aussi une partie 21d inclinée à l'inverse du bandeau 21c et se raccordant à la face avant 24.

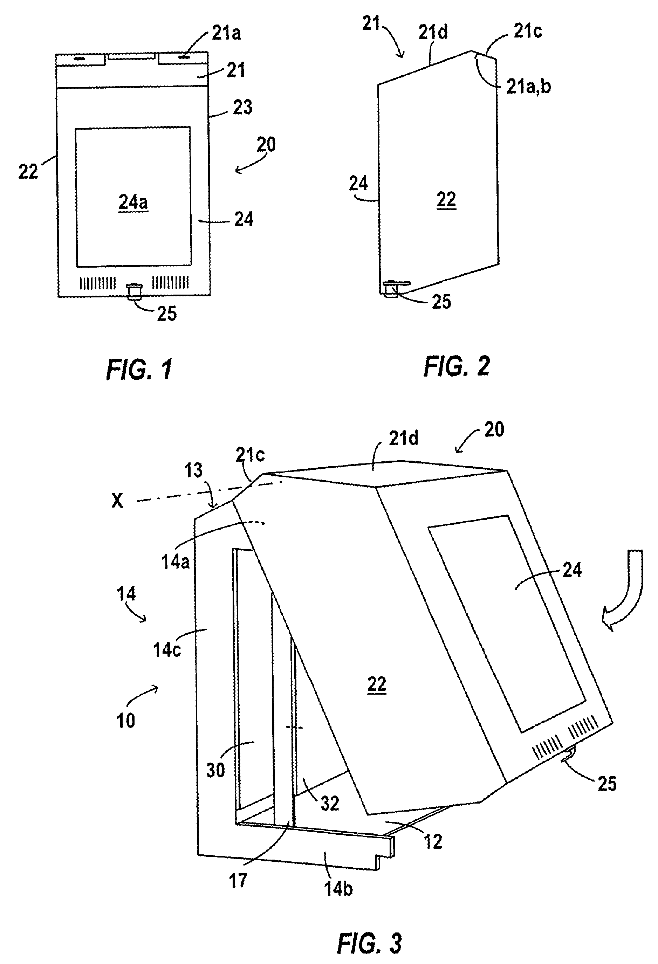

Le capot se monte de la manière suivante sur le support. L'opérateur saisit le capot, le place dans la position inclinée illustrée figure 3 et engage les languettes 21a,21b dans les fentes 13a,13b du support. Puis il fait basculer le capot autour de l'axe horizontal X défini par les fentes jusqu'à butée d'un retour inférieur interne de la paroi 24 contre le bord de l'aire 12. Il tourne alors l'organe de fermeture 25 qui s'engage dans l'élément 12a et bloque le capot.

## Revendications

1. Coffret métallique destiné à loger des éléments ou appareils électriques de connexion, commutation ou communication, comprenant un support (10) pour les éléments électriques, à fond ou châssis arrière (11) destiné à porter de tels éléments, et un capot (20) enveloppant qui est fixé de façon amovible au support (10),
***caractérisé par le fait que***
- le support (10) d'éléments électriques comprend une face supérieure (13) d'accrochage du capot (20), et une aire inférieure horizontale (12) munie d'un élément de fermeture (12a),
- le capot enveloppant (20) est accroché à la face (13) et verrouillé sur l'élément de fermeture (12a),
- le support (10) présente à sa partie supérieure des avancées horizontales (14a) dotées d'ailes (15) perforées à pas régulier et à sa partie inférieure des réglettes (18) perforées à pas régulier et associées à l'aire horizontale (12), les avancées et réglettes étant agencées pour permettre une fixation réglable en profondeur d'organes de montage (31,32).

2. Coffret métallique selon la revendication 1, **caractérisé par le fait que**
- la face (13) du support prévue pour l'accrochage du capot est pliée et dotée de fentes (13a,13b),
- le capot enveloppant (20) comprend à sa partie supérieure une face (21) munie de languettes (21a,21b) venues de pliage ou crevé, les languettes étant conçues pour s'engager dans les fentes du support et former un axe (X) de basculement, et comprend à sa partie inférieure un organe de fermeture (25) coopérant avec l'élément de fermeture.

3. Coffret selon la revendication 2, **caractérisé par le fait que** la face (13) du support (10) est inclinée de façon à monter de l'arrière vers l'avant et que la face (21) du capot (20) présente une partie (21 a) coopérant avec la face du support et douée de la même inclinaison montante de l'arrière vers l'avant.

4. Coffret selon la revendication 1, **caractérisé par le fait que** le support (10) est constitué d'une seule pièce découpée et pliée présentant la face pliée (13) d'accrochage du capot, les avancées horizontales (14a) à ailes latérales pliées (15) et l'aire inférieure horizontale (12).

5. Coffret selon la revendication 4, **caractérisé par** des flancs bas (14b) pliés, associés à l'aire horizontale (12) et reliés aux flancs hauts (14a) par des liaisons verticales pliées (14c), les flancs bas déterminant avec les flancs hauts et les liaisons verticales un gabarit de montage pour le capot (20).

6. Coffret selon la revendication 1, **caractérisé par** des liaisons verticales (14c) situées entre la face du support (13) et l'aire horizontale (12) et pliées pour former des ailes frontales (16) perforées à pas régulier, les liaisons verticales (14c) étant rattachées aux avancées horizontales (14a) pour contribuer à la rigidité du support.

## Claims

1. Metal enclosure designed to house electrical connection, switching or communication elements or devices, comprising a support (10) for the electrical elements, with a back or rear frame (11) designed to support such elements, and an enveloping cover (20) that is fixed removably to the support (10), **characterized in that**
- the support (10) for electrical elements comprises a top face (13) for the coupling of the cover (20) and a horizontal bottom area (12) furnished with a closure element (12a),
- the enveloping cover (20) is coupled to the face (13) and locked onto the closure element (12a),
- the support (10) has, at its top portion, horizontal protrusions (14a) furnished with wings (15) perforated at an even pitch and at its bottom portion, terminating blocks (18) perforated at even pitch and associated with the horizontal area (12), the protrusions and terminating blocks being arranged to allow a depth-adjustable fastening of mounting members (31, 32).

2. Metal enclosure according to Claim 1, **characterized in that**
- the face (13) of the support provided for the coupling of the cover is folded and furnished with slots (13a, 13b),
- the enveloping cover (20) comprises, at its top portion, a face (21) furnished with tongs (21a, 21b) made by bending or split, the tongs being designed to be engaged in the slots of the support and form a tilting axis (X), and comprises, at its bottom portion, a closure member (25) interacting with the closure element.

3. Enclosure according to Claim 2, **characterized in that** the face (13) of the support (10) is inclined so as to rise from the rear to the front and that the face (21) of the cover (20) has a portion (21a) interacting with the face of the support and furnished with the same rising inclination from the rear to the front.

4. Enclosure according to Claim 1, **characterized in that** the support (10) consists of a single cut and folded piece having the folded coupling face (13) of the cover, the horizontal protrusions (14a) with folded lateral wings (15) and the bottom horizontal area (12).

5. Enclosure according to Claim 4, **characterized by** folded bottom sides (14b), associated with the horizontal area (12) and connected to the top sides (14a) by vertical folded connecting elements (14c), the bottom sides determining with the top sides and the vertical connecting elements a mounting gauge for the cover (20).

6. Enclosure according to Claim 1, **characterized by** vertical connecting elements (14c) situated between the face of the support (13) and the horizontal area (12) and folded to form frontal wings (16) perforated at even pitch, the vertical connecting elements (14c) being attached to the horizontal protrusions (14a) in order to contribute to the rigidity of the support.

## Patentansprüche

1. Metallkasten, der dazu bestimmt ist, elektrische Verbindungs-, Schalt- oder Kommunikationselemente oder -geräte aufzunehmen, mit einem Träger (10) für die elektrischen Elemente mit einem hinteren Boden oder Rahmen (11), der dazu bestimmt ist, derartige Elemente zu tragen, und einer umgebenden Haube (20), die abnehmbar an dem Träger (10) befestigt ist,
**dadurch gekennzeichnet, dass**
- der Träger (10) für elektrische Elemente eine obere Fläche (13) zum Einhaken der Haube (20) und einen horizontalen unteren Bereich (12), der mit einem Verschlusselement (12a) versehen ist, aufweist,
- die umgebende Haube (20) an der Fläche (13) eingehakt und an dem Verschlusselement (12a) verriegelt wird,
- der Träger (10) in seinem oberen Teil horizontale Vorsprünge (14a) aufweist, die mit Flügeln (15) versehen sind, die mit einer regelmäßigen Schrittweite perforiert sind, und in seinem hinteren Teil Leisten (18) aufweist, die mit einer regelmäßigen Schrittweite perforiert sind und dem horizontalen Bereich (12) zugeordnet sind, wobei die Vorsprünge und Leisten angeordnet sind, um eine tiefeneinstellbare Befestigung von Montageorganen (31, 32) zu ermöglichen.

2. Metallkasten nach Anspruch 1, **dadurch gekennzeichnet, dass**
- die Fläche (13) des Trägers, die vorgesehen ist, um die Haube einzuhaken, gefalzt und mit Schlitzen (13a, 13b) versehen ist,
- die umgebende Haube (20) in ihrem oberen Teil eine Fläche (21) aufweist, die mit Laschen (21a, 21b) versehen ist, die sich durch Umbiegen ergeben oder ausgerissen sind, wobei die Laschen dazu vorgesehen sind, mit den Schlitzen des Trägers in Eingriff zu gelangen und eine Schwenkachse (X) zu bilden, und in ihrem unteren Teil ein Verschlussorgan (25) aufweist, das mit dem Verschlusselement zusammenwirkt.

3. Kasten nach Anspruch 2, **dadurch gekennzeichnet, dass** die Fläche (13) des Trägers (10) in der Weise geneigt ist, dass sie von hinten nach vorn ansteigt, und dass die Fläche (21) der Haube (20) einen Teil (21a) aufweist, der mit der Fläche des Trägers zusammenwirkt und mit der gleichen von hinten nach vorn zunehmenden Neigung versehen ist.

4. Kasten nach Anspruch 1, **dadurch gekennzeichnet, dass** der Träger (10) aus einem einzigen ausgestanzten und umgebogenen Teil gebildet ist, das die umgebogene Einhakfläche (13) der Haube, die horizontalen Vorsprünge (14a) mit umgebogenen Seitenflügeln (15) und den horizontalen unteren Bereich (12) umfasst.

5. Kasten nach Anspruch 4, **gekennzeichnet durch** umgebogene untere Seitenflächen (14b), die dem horizontalen Bereich (12) zugeordnet sind und mit oberen Seitenflächen (14a) **durch** umgebogene vertikale Verbindungen (14c) verbunden sind, wobei die unteren Seitenflächen mit den oberen Seitenflächen und den vertikalen Verbindungen eine Montagevorrichtung für die Haube (20) festlegen.

6. Kasten nach Anspruch 1, **gekennzeichnet durch** vertikale Verbindungen (14c), die sich zwischen der Fläche des Trägers (13) und dem horizontalen Bereich (12) befinden und umgebogen sind, um vordere Flügel (16) zu bilden, die mit einer regelmäßigen Schrittweite perforiert sind, wobei die vertikalen Verbindungen (14c) an die horizontalen Vorsprünge (14a) angefügt sind, um zu der Starrheit des Trägers beizutragen.
